# EUROPEAN PATENT APPLICATION

(11) **EP 4 036 373 A1**
(43) Date of publication of application: **03.08.2022**
(21) Application number: 22164678.9
(22) Date of filing: 18.02.2016
(51) Int. Cl.: F01D 5/28, B22D 27/04, F02K 3/06

(54) **GEARED TURBOFAN WITH HIGH GEAR RATIO AND HIGH TEMPERATURE CAPABILITY**

(30) Priority: 18.02.2015 US 201514624668
(62) Divisional of application: 16156289.7
(71) Applicant: Raytheon Technologies Corporation, Farmington, CT 06032 (US)
(72) Inventor: SCHWARZ, Frederick M., Glastonbury, 06033 (US); SUCIU, Gabriel L., Glastonbury, 06033 (US)
(74) Representative: Dehns

(57) **Abstract**

A gas turbine engine (20; 80; 110) comprises a fan rotor (82) having blades with an outer diameter greater than or equal to 77 inches (196 centimeters) and less than or equal to 135 inches (343 centimeter). The fan rotor (82) has less than or equal to 26 fan blades, and is driven by a fan drive turbine rotor (98) through a gear reduction (83). The gear reduction (83) has a gear ratio of greater than 2.6:1. The fan rotor (82) delivers air into a bypass duct as bypass air, and into a duct leading to a compressor rotor (86, 90) as core air. A ratio of bypass air to the core air is greater than or equal to 12:1. An upstream turbine rotor (88, 92; 96) is upstream of the fan drive turbine rotor (98) and drives a compressor rotor (86, 90). The upstream turbine rotor (88, 92; 96) has at least two stages, and the fan drive turbine rotor (98) has at least three stages. The turbine blades in at least one stage of the fan drive turbine rotor (98) are provided with a performance enhancing feature.

## Description

### BACKGROUND OF THE INVENTION

This application relates to a geared turbofan engine which may be particularly beneficial for application on regional jet engines.

Gas turbine engines are known and typically include a fan delivering air into a compressor, and into a bypass duct as propulsion air. Air in the compressor is compressed and delivered into a combustion section where it is mixed with fuel and ignited. Products of this combustion pass downstream over turbine rotors driving them to rotate.

Historically, a turbine rotor drove an upstream compressor rotor and a fan rotor at a single speed.

More recently, it has been proposed to include a gear reduction between the fan rotor and the upstream compressor rotor, such that the fan can rotate at slower speeds. This has provided a great deal of freedom to the designer of gas turbine engines.

To date, there has been little activity in tailoring geared turbofan engines to particular application in aircraft which will utilize the gas turbine engine.

### SUMMARY OF THE INVENTION

In a featured embodiment, a gas turbine engine comprises a fan rotor having blades with an outer diameter. The outer diameter is greater than or equal to 77 inches (196 centimeters) and less than or equal to 135 inches (343 centimeter). The fan rotor has less than or equal to 26 fan blades, and is driven by a fan drive turbine through a gear reduction. The gear reduction has a gear ratio of greater than 2.6:1. The fan rotor delivers air into a bypass duct as bypass air, and into a duct leading to a compressor rotor as core air. A ratio of bypass air to the core air is greater than or equal to 12:1. An upstream turbine rotor is upstream of the fan drive turbine and drives a compressor rotor. The upstream turbine rotor has at least two stages, and the fan drive turbine rotor has at least three stages. The turbine blades in at least one stage of the fan drive turbine rotor are provided with a performance enhancing feature. The performance enhancing feature is at least one of the blades being manufactured by a directionally solidified blade material. The blades are provided as single crystal blades, and have a radially outer platform provided with scalloping to reduce the weight of the blades. The blades are provided with cooling air.

In another embodiment according to the previous embodiment, the gear ratio is greater than 3.06:1.

In another embodiment according to any of the previous embodiments, the gear ratio is a star gearbox.

In another embodiment according to any of the previous embodiments, an area is defined at a downstream end of the upstream turbine rotor, and a second area is defined at a downstream end of the fan drive turbine rotor. The upstream turbine rotor rotates ng at a first speed and the fan drive turbine rotor rotates at a second speed. A performance quantity of the upstream turbine rotor is defined by the first cross-sectional area multiplied by the first speed squared. A performance quantity of the fan drive turbine rotor is defined by the second cross-sectional area multiplied by the second speed squared. The first performance ratio is less than the second performance ratio.

In another embodiment according to any of the previous embodiments, the second performance quantity is greater than or equal to at least 5.0 times 10 squared (5.0 x 10²).

In another embodiment according to any of the previous embodiments, the blades in the at least one stage are manufactured by a directionally solidified blade material.

In another embodiment according to any of the previous embodiments, the blades in the at least one stage are provided as single crystal blades.

In another embodiment according to any of the previous embodiments, the blades in the at least one stage have a radially outer platform, which is provided with scalloping to reduce the weight of the blades in the at least one stage.

In another embodiment according to any of the previous embodiments, the blades in the at least one stage are provided with cooling air.

In another embodiment according to any of the previous embodiments, an area is defined at a downstream end of the upstream turbine rotor, and a second area is defined at a downstream end of the fan drive turbine rotor. The upstream turbine rotor rotates at a first speed and the fan drive turbine rotor rotates at a second speed. A performance quantity of the upstream turbine rotor is defined by the first cross-sectional area multiplied by the first speed squared and a performance quantity of the fan drive turbine rotor being defined by the second cross-sectional area multiplied by the second speed squared. The first performance ratio is less than the second performance ratio.

In another embodiment according to any of the previous embodiments, the second performance quantity is greater than or equal to at least 5.0 times 10 squared (5.0 x 10²).

In another embodiment according to any of the previous embodiments, the blades in the at least one stage are manufactured by a directionally solidified blade material.

In another embodiment according to any of the previous embodiments, the blades are provided as single crystal blades.

In another embodiment according to any of the previous embodiments, the blades in the at least one stage have a radially outer platform, which is provided with scalloping to reduce the weight of the blades in the at least one stage.

In another embodiment according to any of the previous embodiments, the blades in the at least one blade row are provided with cooling air.

In another embodiment according to any of the previous embodiments, the gas turbine engine is for use on a single aisle aircraft.

These and other features may be best understood from the following drawings and specification.

### BRIEF DESCRIPTION OF THE DRAWINGS

Figure 1 schematically shows a gas turbine engine.
Figure 2 schematically shows an alternative engine.
Figure 3 shows a feature of two turbine sections.
Figure 4 shows a turbine section of an example engine.
Figure 5 shows a feature of a turbine blade.
Figure 6 shows an alternative turbine blade.
Figure 7 schematically shows an aircraft which may utilize the disclosed gas turbine engine.

### DETAILED DESCRIPTION

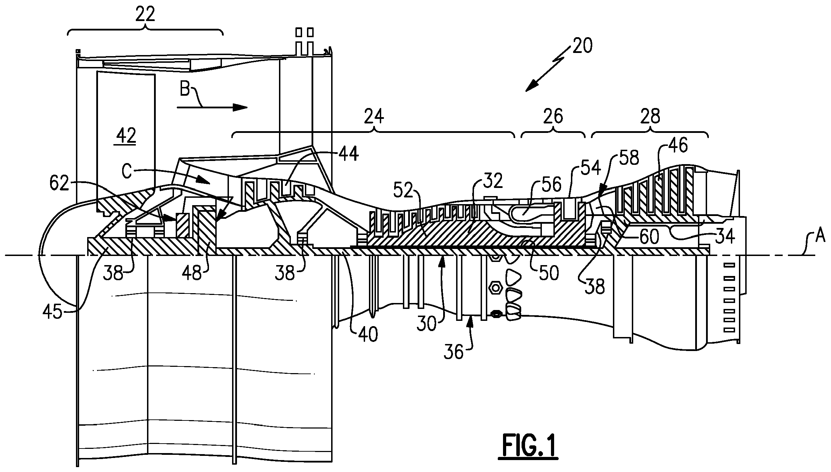

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6:1), with an example embodiment being greater than about ten (10:1), the geared architecture 48 is an epicyclic gear train, such as a planetary gear system or other gear system, with a gear reduction ratio of greater than about 2.3 (2.3:1) and the low pressure turbine 46 has a pressure ratio that is greater than about five (5:1). In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 meters/second).

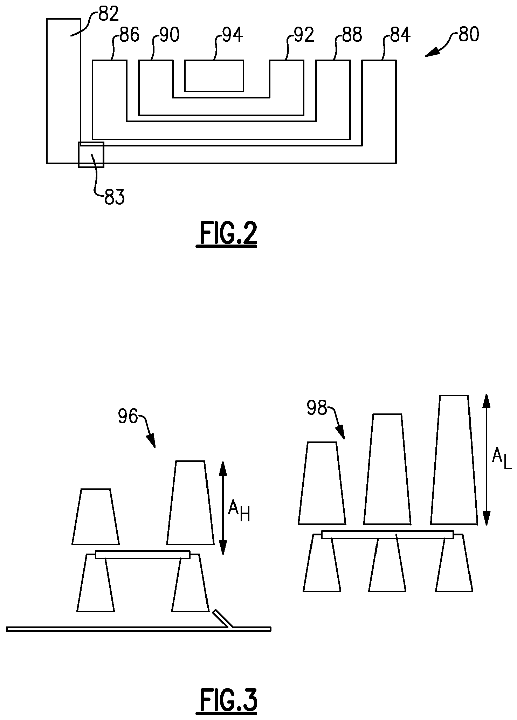

Figure 2 shows an alternative engine 80. Alternative engine 80 has a fan rotor 82 being driven by a gear reduction 83, which is, in turn, driven by a fan drive turbine 84. An upstream compressor rotor 86 is driven by an intermediate turbine rotor 88. A downstream compressor rotor 90 is driven by a high pressure turbine rotor 92. A combustor 94 is also shown schematically.

The features described below, with regard to turbine sections, may be incorporated into engines such as shown in Figures 1 or 2. In connection with Figure 1, the upstream turbine section, as described, would be the high pressure turbine rotor 54, while the downstream turbine rotor or fan drive turbine rotor would be the low pressure turbine 46. In connection with the Figure 2 engine, the upstream turbine rotor may be the intermediate turbine rotor 88, while the downstream turbine rotor or fan drive turbine rotor would be turbine rotor 84.

In particular, the disclosed gas turbine engine will have a very high bypass ratio. Further, a gear ratio of the gear reduction will be relatively high. To increase the efficiency of the fan drive turbine, the speed of the fan drive turbine will be beneficially increased. This can be best achieved by increasing the gear reduction such that the fan rotor does not also increase in speed.

However, increasing the speed of the fan drive turbine will increase the temperature related challenges on the fan drive turbine. Thus, the following disclosure will provide improvements to the fan drive turbine and the overall turbine section, to increase the ability to withstand high temperatures.

In particular, the bypass ratio is desirably greater than or equal to about 12:1. The gear reduction preferably is a gear ratio of 3.06:1, and is a star gearbox.

A fan diameter is preferably greater than or equal to 77 inches (196 centimeters), but less than or equal to 135 inches (343 centimeters). Preferably, there are less than 26 fan blades.

As shown in Figure 3, in turbine rotor 96, which is directly upstream of the fan drive turbine rotor 98, there are preferably at least two stages. The fan drive turbine preferably has at least three stages.

A first area A_{H} is defined at a downstream end of the upstream turbine rotor 96. A second area A_{L} is defined at a downstream end of the fan drive turbine rotor 98. The upstream turbine rotor 96 rotates at a first speed and the fan drive turbine rotor 98 rotates at a second speed. A first performance quantity (AN²) of the upstream turbine rotor 96 is defined by cross-sectional area A_{H} multiplied by its speed squared. A second performance quantity (AN²) of the fan drive turbine rotor 98 is defined by cross-sectional area A_{L} multiplied by its speed squared. The second performance ratio is greater than or equal to at least 5.0 times 10 squared (5.0 x 10²) RPM in² (3226 RPM cm²) at engine redline speed, which is slightly higher than takeoff.

The performance quantity of upstream turbine rotor 58 is less than the performance quantity of the fan drive turbine rotor 98.

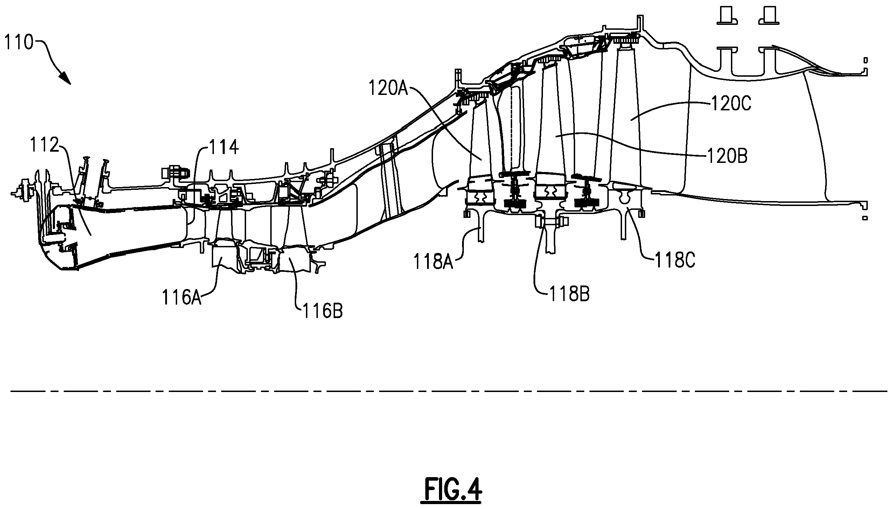

As shown in Figure 4, an engine 110 has combustor 114. A first turbine vane 114 will "see" products of combustion at temperature of at least 2790°F (1532°C). This is known as the T4.1 location.

An upstream turbine rotor has two stages, 116A and 116B. The fan drive turbine rotor has three stages, 118A, 118B, and 118C. As shown, blades 120A, 120B, and 120C are associated with the stages 118A, 118B, and 118C, respectively.

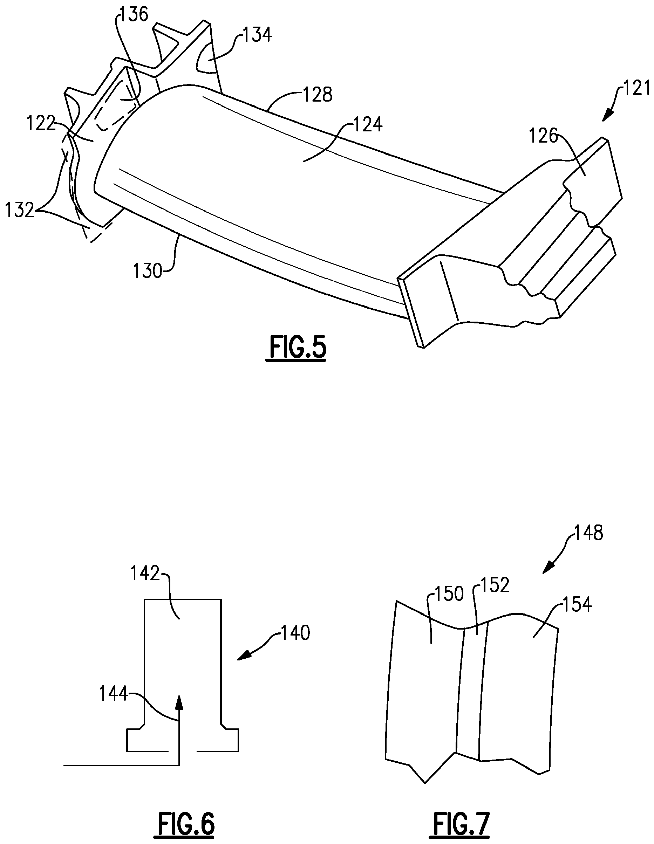

The blades 120A, 120B, and 120C preferably have some feature provided to increase their resistance to high temperatures. Such features are disclosed in the following paragraphs and Figures 5 and 6.

In one embodiment, the blades may be formed of a directionally solidified blade material, or a single crystal blade.

As shown in Figure 5, alternatively, a blade 121 may be utilized that has an outer platform 122, an airfoil 124, and an inner platform 126. Outer platform 122 is provided with scalloping to reduce the weight. The turbofan has a high temperature level, and everything in it is similarly hot. It is desirable to produce an engine with fan-drive turbine blades with high (for example 15000) cycles of life. The scallops increase to temperature tolerance. There is the notion of "allowable stress" which is the stress one can put onto the part at the temperature it is running. A limiting area of this blade is in fact at the neck, where it meets the disk, but one can reduce the stress, and raise the temperature tolerance to meet the cycle goal by putting the scallops in so the pull is less. So the blade's pull on the neck is reduced as the temperature is increased and the allowable stress goes down which allows the temperatures to go up. If enough is provided, a designer can increase temperature due to the big radius involved. There is a manufacturing cost associated with this that will sometimes be justified. Thus, as shown, there is a leading edge 128 and a trailing edge 130. The trailing edge 130 may be provided with scalloping 132 on an underside. The platform 122 may be provided with scalloping 134 at the leading edge 128. Further scalloping 136 may be provided on an underside of the platform.

The "scallops" could be described as an interrupted body of revolution. A shroud has two ID corners and two OD corners, and these are interrupted by the scallops and are no longer a two dimensional curve, but rather become a 3 dimensional curve. Similarly, the OD surface of the shroud, adjacent to the knife edges, is conventionally a surface of simple revolution also; adding scallops interrupts that surface and the surface moves toward the centerline locally.

An alternative blade 140 is illustrated in Figure 6. Blade 140 is shown to have an airfoil 142 provided with cooling air 144. The provision of cooling air to a turbine blade is not, in itself, novel, however, the use of such a blade in the particular disclosed system provides benefits.

Figure 7 schematically shows an aircraft 148, which may particularly benefit from the disclosed engine. As shown, the aircraft 148 has a passenger section 150, a single aisle 152, and another passenger section 154. So-called "single aisle" aircraft are utilized on medium to short range flights and in the range of 3,900 miles (6.3 km) or less. Typically, the passenger capacity for such an aircraft is less than 300 and more narrowly less than 250.

Short to medium range aircraft spend more time at high stress conditions and, in particular, take-off and climb than do longer range aircraft. As such, the engines are subjected to more stresses and the disclosure of this application will provide valuable benefits which are synergistically realized in such aircraft.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A gas turbine engine (20; 80; 110) comprising:
a fan rotor (82) having blades with an outer diameter, said outer diameter being greater than or equal to 77 inches (196 centimeters) and less than or equal to 135 inches (343 centimeter), and said fan rotor (82) having less than or equal to 26 fan blades;
said fan rotor (82) driven by a fan drive turbine rotor (98) through a gear reduction (83), said gear reduction (83) having a gear ratio of greater than 2.6:1, and said fan rotor (82) delivering air into a bypass duct as bypass air, and into a duct leading to a compressor rotor (86, 90) as core air, and a ratio of bypass air to said core air being greater than or equal to 12:1;
an upstream turbine rotor (88, 92; 96) upstream of said fan drive turbine rotor (98) and driving a compressor rotor (86, 90), and said upstream turbine rotor (88, 92; 96) having at least two stages, and said fan drive turbine rotor (98) having at least three stages; and
turbine blades in at least one stage of said fan drive turbine rotor (98) being provided with a performance enhancing feature, and said performance enhancing feature is:
said blades being manufactured by a directionally solidified blade material;
said blades provided as single crystal blades;
said blades having a radially outer platform provided with scalloping to reduce the weight of said blades; and/or
said blades being provided with cooling air.

2. The gas turbine engine (20; 80; 110) as set forth in claim 1, wherein said gear ratio is greater than 3.06:1.

3. The gas turbine engine (20; 80; 110) as set forth in claim 1 or 2, wherein said gear reduction (83) is a star gearbox.

4. The gas turbine engine (20; 80; 110) as set forth in claim 1, 2 or 3, wherein an area (A_{H}) is defined at a downstream end of said upstream turbine rotor (96), and a second area (A_{L}) is defined at a downstream end of said fan drive turbine rotor (98), said upstream turbine rotor (96) rotating at a first speed and said fan drive turbine rotor (98) rotating at a second speed, and a performance quantity of said upstream turbine rotor (96) being defined by said first cross-sectional area (A_{H}) multiplied by said first speed squared and a performance quantity of said fan drive turbine rotor (98) being defined by said second cross-sectional area (A_{L}) multiplied by said second speed squared, and said first performance ratio is less than said second performance ratio.

5. The gas turbine engine (20; 80; 110) as set forth in claim 4, wherein said second performance quantity being greater than or equal to at least 5.0 times 10 squared (5.0 x 10²) RPM in² (3226 RPM cm²).

6. The gas turbine engine as set forth in any preceding claim, wherein said blades in said at least one stage are manufactured by a directionally solidified blade material.

7. The gas turbine engine as set forth in any preceding claim, wherein said blades in said at least one stage are provided as single crystal blades.

8. The gas turbine engine as set forth in any preceding claim, wherein said blades in said at least one stage having a radially outer platform and said radially outer platform being provided with scalloping to reduce the weight of said blades in said at least one stage.

9. The gas turbine engine as set forth in any preceding claim, wherein said blades in said at least one stage are provided with cooling air.

10. The gas turbine engine (20; 80; 110) as set forth in any preceding claim, wherein said gas turbine engine (20; 80; 100) is for use on a single aisle aircraft (148).
